# EUROPEAN PATENT APPLICATION

(11) **EP 1 890 170 A1**
(43) Date of publication of application: **20.02.2008**
(21) Application number: 07015959.5
(22) Date of filing: 14.08.2007
(51) Int. Cl.: G01W 1/00

(54) **A modular atmospheric research pod**

(30) Priority: 16.08.2006 US 504832
(71) Applicant: University Corporation for Atmospheric Research, Boulder, CO 80307 (US)
(72) Inventor: The designation of the inventor has not yet been filed
(74) Representative: Lane, Michael John

(57) **Abstract**

A system and method for a modular pod (100) is disclosed. The pod (100) has a central body (102) configured with a mounting system (210) for holding a plurality of different instruments. The different instruments can be interchanged in the pod (100) through a side access panel (412), though the front or rear of the pod (100) or by interchanging a plurality of nose cones (104). The tail cone (106) of the pod (100) may also be interchanged.

## Description

### Background of the Invention

### 1. Field of the Invention

The invention is related to the field of atmospheric research, and in particular, to an atmospheric research pod for atmospheric research jets.

### 2. Statement of the Problem

Atmospheric research has been conducted for many years using pods attached to the external surfaces of aircraft. Pods may also be called stores, external stores, underwing stores, or the like. The pods are usually attached to hard points underneath the aircraft wing, or attached to the aircraft fuselage. Atmospheric research aircraft typically come in two sizes, large and small. The large aircraft are typically modified four engine cargo planes and the small aircraft are typically single engine passenger aircraft. The large aircraft typically have significant lift capacity. Atmospheric research pods designed for the large aircraft have a corresponding large size and volume. Atmospheric research pods designed for the small aircraft typically have a small size with limited capacity.

The cost of medium size aircraft, specifically long range and ultra-long range business class jets, has dropped significantly in recent years. The falling prices for these aircrafts have now made it affordable so that they can be used as atmospheric research platforms. Unfortunately, pods designed for the larger aircraft may be too large for these jets and the pods designed for the smaller aircraft don't take advantage of the increased capacity of the medium sized jets. Therefore there is a need for a pod designed for the long range and ultra-long range business class jets.

Currently, pods are designed with a specific application or instrument in mind. A pod designed for use with a radar would have the radar built into the body of the pod and the front end of the pod would be made from a radar transparent material. A pod designed for use with an optical sensor may have an optical window in the tip or body of the pod or an opening in the pod. When the aircraft is being used for radar measurement, the radar pod is attached to the aircraft and when optical measurements are being made the optical pod is attached to the aircraft. Having separate pod designs for each type of instrument used in atmospheric research may not be cost effective. In addition, removing a pod from an aircraft hard point and attaching a different pod may not be the quickest way to change the atmospheric instrumentation on a research jet.

Therefore there is a need for a system and method for using a modular pod design for atmospheric instrumentation.

### Summary of the Solution

A system and method for a modular pod is disclosed. The pod has a central body configured with a mounting system for holding a plurality of different instruments. The different instruments can be interchanged in the pod through a side access panel, though the front or rear of the pod or by interchanging a plurality of nose cones. The tail cone of the pod may also be interchanged.

### Description of the Drawings

The same reference number represents the same element on all drawings.
FIG. 1 is an exploded view of pod 100 in an example embodiment of the invention.
FIG. 2 is an isometric view of main body 202 with an axial rack mounting system in an example embodiment of the invention.
FIG. 3 is an isometric view of main body 302 with a radial rack mounting system in an example embodiment of the invention.
FIG. 4 is an isometric view of main body 402 with a plurality of swappable side panels 415 in an example embodiment of the invention.
FIG. 5 is a flow chart for operation of a pod in an example embodiment of the current invention.
FIG. 6 is a drawing of the wing, pylon and pod in one example embodiment of the invention.
FIG. 7 is a plot of the pod dimensions in one example embodiment of the invention.

### Detailed Description of the Invention

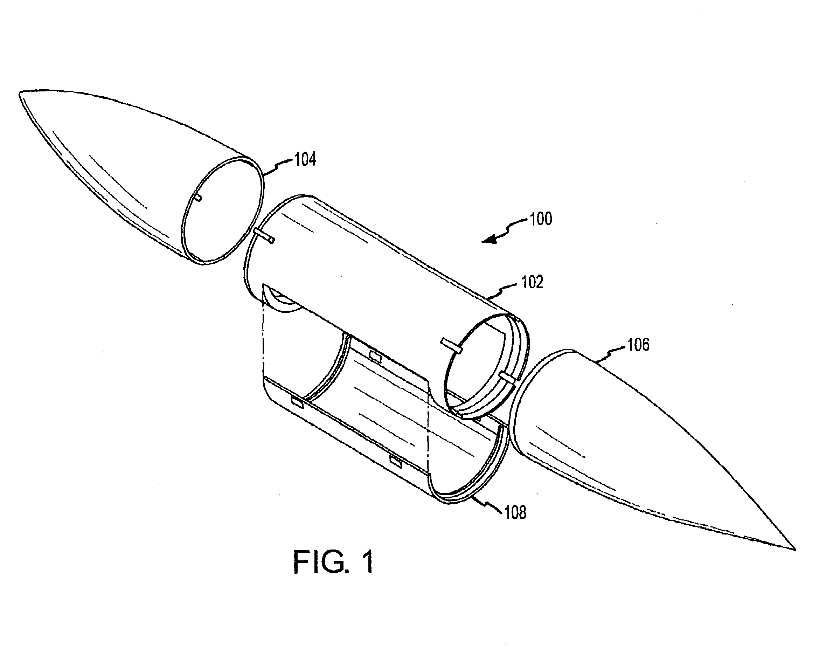

FIGS. 1-5 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention. As a result, the invention is not limited to the specific examples described below, but only by the claims and their equivalents.

The size and shape for pod designs are constrained by a number of different factors. One factor is where the pod will attach to the aircraft. The two main locations for attaching pods are under the wing and to the fuselage of the aircraft. When the pod is attached under the wing, the pod diameter is limited by the distance between the wing and the ground and the distance between the wing and the pod. The wing to pod dimension is determined as the distance that is needed to maintain proper air flow characteristics around the wing at the pod location. The wing to ground clearance is typically calculated under a worst case scenario, for example a flat tire and maximum strut compression in the landing gear. The length the pod can extend at the trailing edge of the wing is constrained by the location of the flaps at full deflection. The length the pod can extend beyond the leading edge of the wing may vary depending on engine configuration and pod location. For example, an aircraft with fuselage mounted engines and a pod mounted under the wing close to the fuselage, may limit the amount a pod can extend beyond the leading edge of the wing to prevent airflow disruption to the engine by the pod in high angle of attack maneuvers. The nose cone and tail cone shapes are typically a trade-off between the internal volume of the pod and the flight characteristic of the pod. For example, a more rounded nose cone typically increases the internal volume of the pod but also increase the drag induced by the pod. The operating speed of the aircraft also affects the shape of the nose cone. Typically, higher operating speeds require nose cones with less rounded shapes and with sharper points.

Figure 1 is an exploded view of pod 100 in an example embodiment of the invention. Pod 100 comprises main body 102, nose cone 104, tail cone 106 and removable cover 108. Main body 102 is a cylindrically shaped section that is attached under the wing of an aircraft using a pylon (not shown). Nose cone 104 attaches to one end of main body 102 and tail cone 106 attaches to the other end of main body 102. Main body 102 may have an access opening in the side of the cylindrical shape allowing access into the interior of the main body. Removable cover 108 seals the side access opening during operation of the probe. Access to the interior of the pod may also be through one or both ends of the pod. In one example embodiment of the invention the nose cone 104 and the tail cone 106 have the same shape. In another example embodiment of the invention the nose cone has a different shape than the tail cone. Nose cone 104 and tail cone may be attached to main body 102 using any number of mechanical fixing means, for example bolts, quick release clamps, or the like. Removable cover 108 may also be attached to main body 102 using a variety of fastening means.

Power is delivered from the aircraft to the interior of the pod through the pylon (not shown). Signaling paths comprising electrical connections or optical links are also provided through the pylon to couple equipment and/or sensors inside the probe to equipment inside the aircraft. The power connections and signal connections inside the pod may be separate from or integral with a rack mounting system inside the pod. In one example embodiment of the invention, the rack mounting system may be in an axial configuration allowing equipment and/or sensors to be loaded into the pod through the front or rear of the pod. In another example embodiment of the invention, the rack mounting system may be in a radial configuration allowing equipment and/or sensors to be loaded into the pod through the side access opening. Other rack mounting configurations are also possible. The rack mounting system may use quick coupling connectors and mechanical latches to allow equipment to be easily installed and removed from the pod.

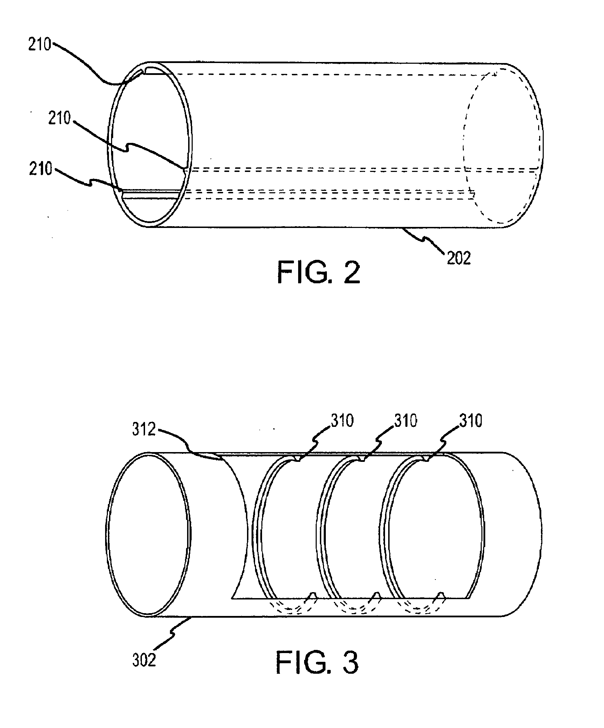

Figure 2 is an isometric view of main body 202 with an axial rack mounting system in an example embodiment of the invention. The axial rack mounting system has three rails 210 attached to the interior surface of the cylindrical main body 202 that run parallel to the cylindrical axis. Sensors and/or equipment can be slid onto the rails and clamped or locked in place. Main pod body 202 may contain side access openings (not shown) to allow easier access into main pod body 202. An axial rack mounting system may contain more than three rails. The rack mounting system may also be used to attach the nose cone and/or the tail cone (not shown) to the main body 202.

Figure 3 is an isometric view of main body 302 with a radial rack mounting system in an example embodiment of the invention. The radial rack mounting system has a number of rails 310 attached to the interior surface of the cylindrical main body 302. The rails are in the form of circular sections inside the cylindrical axis. The rails may form full circles or partial circles. Sensors and/or equipment can be slid over or next to the rails and clamped or locked in place. Main pod body 302 has side access opening 312 to allow access into main pod body 302. A radial rack mounting system may contain any number of rails. The rack mounting system may also be used to attach the nose cone and/or the tail cone (not shown) to the main body 302.

Other types of equipment mounting systems may be used in the pod. For example a pattern of bolts may be attached to the pod interior, or a rack mounting system that combines an axial system and a radial system may be used.

A plurality of equipment/sensors will be configured to mount inside the pod. Some of the sensors may be large and require all the space inside the pod. Other types of sensors or measuring equipment may be small enough such that multiple sensors can be mounted into the pod simultaneously. A plurality of nose cones may be available that are transparent to different portion of the electromagnetic spectrum. For example, one nose cone may be fabricated from fiberglass and be transparent to radar. A second nose cone may be fabricated from clear plastic and be transparent to visible light. In one example embodiment of the invention, test equipment or sensors may be installed in the nose cone. Some of the possible sensors or measuring equipment that can be used in the pod include: cameras, radars, spectrophotometers, lidars, lasers, gas chromatographs, mass spectrophotometers, radiometers, ice rate sensors, water vapor sensors, aerosol size detectors, ice detectors, fast ozone sensors, trace organic gas analyzers, hygrometers, temperature sensors, and the like. Some sensors require sampling the airflow to allow a measurement. The main body of the pod may have a number of smaller panels or ports configured to be swapped with panels that are equipped with sampling probes or air inlet systems. The nose cone may also have features available to provide external air samples.

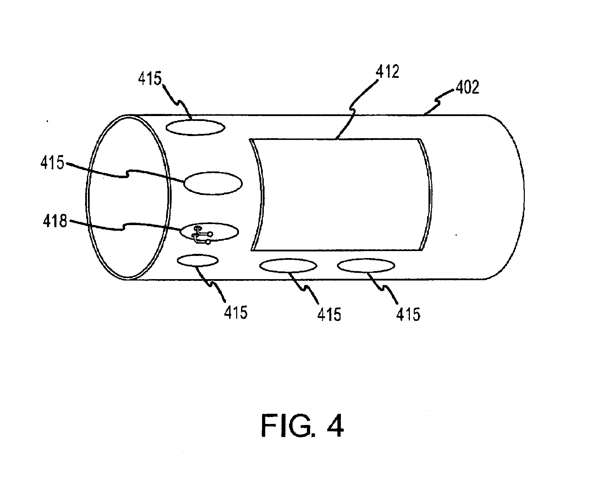

Figure 4 is an isometric view of main body 402 with a plurality of swappable side panels 415 in an example embodiment of the invention. Main body 402 has side access opening 412. Swappable side panels 415 can be located at any number of different positions on main body 402. Side panel 418 has replaced one of the swappable side panels 415 and contains 2 sampling probes. Swappable side panels 415 can be held in place by any number of fastening means, for example a bolt pattern, a system of clamps or the like.

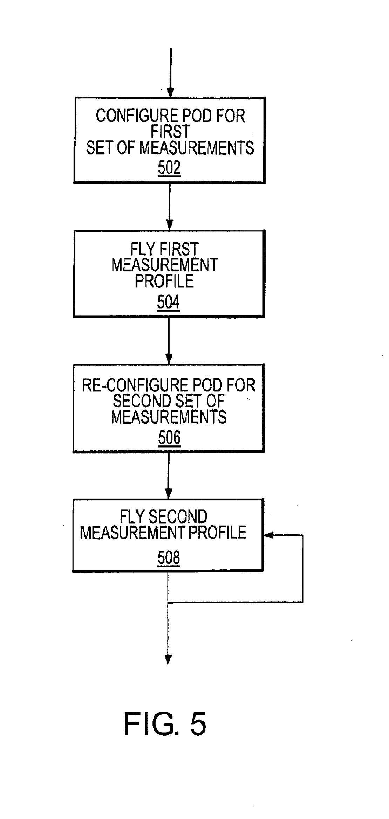

In operation, the pod allows a single aircraft to be used for a number of different atmospheric measurements in a short period of time. Figure 5 is a flow chart for operation of a pod in an example embodiment of the current invention. At step 502 the pod is configured with a first set of atmospheric instruments for a first set of measurements. At step 504 the aircraft takes off and flies the measurement profile and then lands. At step 506 the pod is reconfigured for a different set of measurements. At step 508 the aircraft takes off and flies the second measurement profile and then lands. Step 504 may be repeated a number of time before the pod is reconfigured. Reconfiguring the pod may include removing one or more pieces of equipment or sensors, swapping or replacing one or more removable panels, swapping the nose cone or tail cone, and inserting one or more pieces of equipment or sensors.

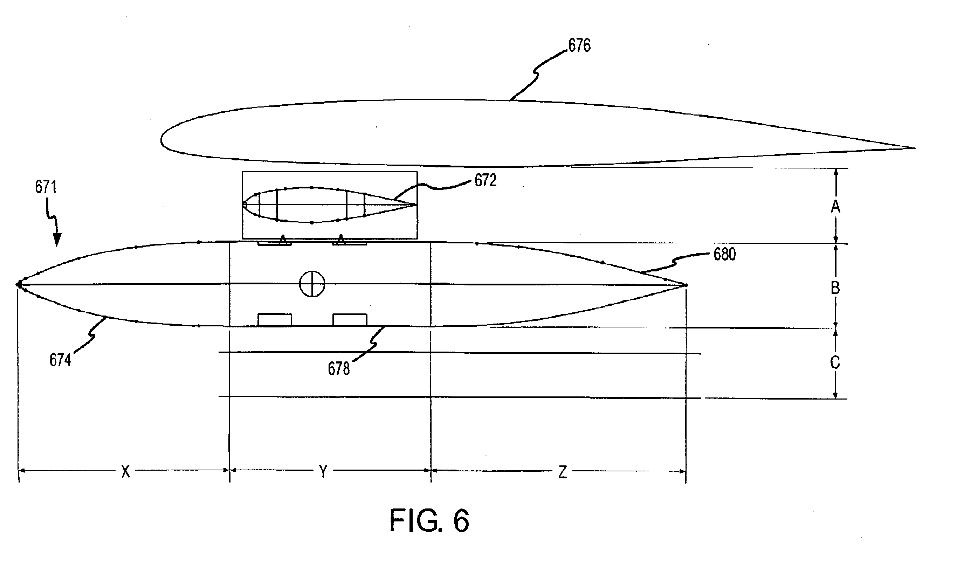

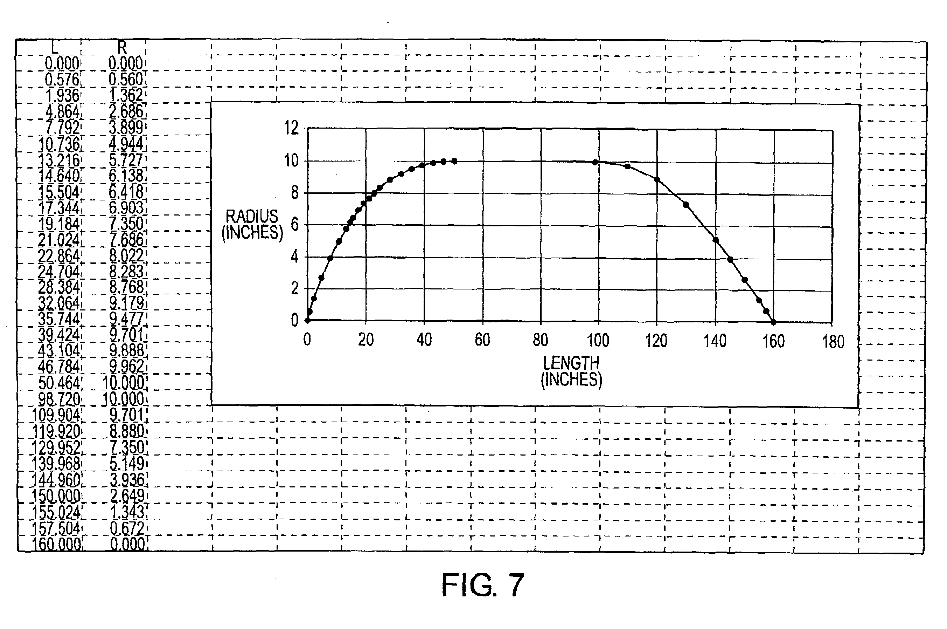

The shape of the nose cone and the shape of the tail cone were determined analytically. The derived geometries were a trade-off between maximizing the internal volume of the pod while limiting the adverse effects on aircraft performance. Data from two National Advisory Committee for Aeronautics (NACA) reports were used during the calculation process. The two NACA reports are: LSQL12 "Investigation of the effects of geometric changes in an underwing pylon-suspended external-store installation on the aerodynamic characteristics of a 45 degree sweptback wing at high subsonic speeds" and L54A21 "Wind-tunnel investigation at high subsonic speeds of the effects of wing-mounted external-stores on the loading and aerodynamic characteristics in pitch of a 45 degree sweptback wing combined with a fuselage" which are hereby incorporated by reference for all that they teach. Figure 6 is a drawing of the wing, pylon and pod in one example embodiment of the invention. Pod 671 is suspended underneath wing 670 by pylon 672. Pod 671 comprises nose cone 674, center section 678 and tail cone 680. The distance between the wing 670 and the pod 671 is distance A. The pod 671 has a diameter B. The distance between the pod 671 and the ground is distance C. The nose cone has length X, the center section has length Y, and the tail cone has length Z. In one example embodiment of the invention, the pod diameter is 20 inches, the nose cone is 50.5 inches long, the center section is 48.3 inches long, and the tail cone is 61.3 inches long, for a total pod length of 160 inches. In one example embodiment of the invention, the shape of the nose cone 674 and tail cone 680 are different. The tail cone shape has been chosen to delay separation of the air flow from the pod at the aft end of the pod to reduce form drag. Figure 7 is a plot of the pod dimensions in one example embodiment of the invention. Column L is the position along the length of the pod starting at the front of the nose cone. Column R is the radius of the pod surface at the position along the length of the pod. In one example embodiment of the invention, the pod is designed to mount on the middle wing hard point of a Gulf stream V aircraft.

The modular nature of a pod and the ability to quickly reconfigure the pod is not limited to a particular pod shape or to a particular aircraft. The modular design of the pod may be used with other pod shapes, other pod locations, and other aircrafts.

## Claims

1. A modular pod (100), comprising:
a generally hollow center section (102) having a front end and a back end and configured to be attached to an external hard point on an aircraft
at least one nose cone (104) configured to be removably attached to the front end of the center section (102);
a tail cone (106) configured to be removably attached to the back end of the central section (102);
a mounting system (210) attached to an interior of the hollow center section (102) and configured to removably mount a plurality of different pieces of equipment inside the hollow center section (102).

2. The modular pod (100) of claim 1 where the generally hollow center section (102) is cylindrical.

3. The modular pod (100) of claim 1 or claim 2 where the mounting system (210) provides power to the plurality of different pieces of equipment and where the mounting system (210) provides a plurality of signaling paths to an interior of the aircraft.

4. The modular pod (100) of claim 3 where the signaling paths are optical signaling paths.

5. The modular pod (100) of any one of claims 1 to 4 further comprising:
a side access opening (412) in the central section 102) covered by a removable cover(108).

6. The modular pod (100) of any one of claims 1 to 5 where the mounting system (210) is an axial rack mounting system.

7. The modular pod (100) of any one of claims 1 to 5 where the mounting system (210) is a radial rack mounting system.

8. The modular pod (100) of any one of the preceding claims where the plurality of equipment is selected from the following: cameras, radars, spectrophotometers, lidars, lasers, gas chromatographs, mass spectrophotometers, radiometers, ice rate sensors, water vapor sensors, aerosol size detectors, ice detectors, fast ozone sensors, trace organic gas analyzers, hygrometers and temperature sensors.

9. The modular pod (100) of any one of the preceding claims further comprising:
a plurality of nose cones (104) where a first one of the plurality of nose cones (104) is transparent to a first portion of the electromagnetic spectrum and a second one of the plurality of nose cones (104) is transparent to a second portion of the electromagnetic spectrum.

10. The modular pod (100) of any one of the preceding claims further comprising:
a plurality of swappable side panels (415) configured to mount in at least one opening in the center section (102).

11. The modular pod (100) of any one of the preceding claims where a total pod length equals 160 inches and a shape of the pod (100) corresponds to the following table where column L is a length along the pod starting at a front of the pod (100) and column R is a radial distance to a pod surface at the given pod length
| L | R |
|---|---|
| 0.000 | 0.000 |
| 0.576 | 0.560 |
| 1.936 | 1.362 |
| 4.864 | 2.686 |
| 7.792 | 3.899 |
| 10.736 | 4.944 |
| 13.216 | 5.727 |
| 14.640 | 6.138 |
| 15.504 | 6.418 |
| 17.344 | 6.903 |
| 19.184 | 7.350 |
| 21.024 | 7.686 |
| 22.864 | 8.022 |
| 24.704 | 8.283 |
| 28.384 | 8.768 |
| 32.064 | 9.179 |
| 35.744 | 9.477 |
| 39.424 | 9.701 |
| 43.104 | 9.888 |
| 46.784 | 9.962 |
| 50.464 | 10.000 |
| 98.720 | 10.000 |
| 109.904 | 9.701 |
| 119.920 | 8.880 |
| 129.952 | 7.350 |
| 139.968 | 5.149 |
| 144.960 | 3.936 |
| 150.000 | 2.649 |
| 155.024 | 1.343 |
| 157.504 | 0.672 |
| 160.000 | 0.000. |

12. A method of using a modular pod, comprising:
configuring the modular pod with a first set of atmospheric instruments for a first set of measurements having a first measurement profile;
flying the modular pod at least once on the first measurement profile;
re-configuring the modular pod with a second set of atmospheric instruments for a second set of measurements having a second measurement profile;
flying the modular pod at least once on the second measurement profile.

13. The method of using a modular pod of claim 12 where reconfiguring the modular pod is selected from the group: replacing at least one piece of equipment, swapping at least one removable side panel, swapping a nose cone, swapping a tail cone, or inserting at least one new piece of equipment.

14. The method of using a modular pod of claim 12 or claim 13 where the first set of atmospheric instruments is selected from the following group: cameras, radars, spectrophotometers, lidars, lasers, gas chromatographs, mass spectrophotometers, radiometers, ice rate sensors, water vapor sensors, aerosol size detectors, ice detectors, fast ozone sensors, trace organic gas analyzers, hygrometers and temperature sensors.
